## Europäisches Patentamt
## European Patent Office
## Office européen des brevets

(19)

(11) Veröffentlichungsnummer: **0 086 484**
**B1**

(12)

# EUROPÄISCHE PATENTSCHRIFT

(45) Veröffentlichungstag der Patentschrift:
03.06.87

(51) Int. Cl.⁴: **G 11 B 23/02,** B 65 D 85/57

(21) Anmeldenummer: **83101404.8**

(22) Anmeldetag: **14.02.83**

(54) Aufbewahrungskassette für plattenförmige Informationsträger hoher Speicherdichte.

(30) Priorität: **16.02.82 DE 3205478**

(43) Veröffentlichungstag der Anmeldung:
**24.08.83 Patentblatt 83/34**

(45) Bekanntmachung des Hinweises auf die Patenterteilung:
**03.06.87 Patentblatt 87/23**

(84) Benannte Vertragsstaaten:
**AT BE CH DE FR GB IT LI LU NL SE**

(56) Entgegenhaltungen:
**EP - A - 0 032 771**
**FR - A - 2 337 397**
**US - A - 3 109 539**
**US - A - 3 949 872**
**US - A - 4 068 851**
**US - A - 4 084 540**

**IBM TECHNICAL DISCLOSURE BULLETIN, Band 20, Nr. 6, November 1977, Seiten 2376-2377, New York, USA. W. E. BEUCH et al.: "Spider collet for flexible magnetic disks"**

(73) Patentinhaber: **POLYGRAM GmbH,**
**Glockengiesserwall 3, D-2000 Hamburg 1 (DE)**

(72) Erfinder: **Grobecker, Hermann, Scheelenkamp 6, D-3008 Garbsen 4 (DE)**
Erfinder: **Heuer, Werner, Steinstrasse 51, D-3160 Lehrte (DE)**
Erfinder: **Zielasek, Adelbert, Dr. Dipl.-Phys., Rhadener Weg 30, D-3006 Burgwedel 1 (DE)**
Erfinder: **Nusselder, Frederik B., Konigslaan 19, NL-1405 GH Bussum (NL)**

(74) Vertreter: **Meier, Friedrich, Dipl.-Ing. et al, Billstrasse 80 Postfach 10 51 49, D-2000 Hamburg 28 (DE)**

**Beschreibung**

Die Erfindung bezieht sich auf eine Aufbewahrungskassette und einen plattenförmigen Informationsträger hoher Speicherdichte, insbesondere Digitalplatte, wobei die Aufbewahrungskassette wenigstens aus einem flachen kastenförmigen Bodenteil und einem dieses Bodenteil an der Oberseite abschliessenden abnehmbaren bzw. aufklappbaren Deckelteil besteht.

Solche, vorzugsweise zur Aufbewahrung normaler Schallplatten vorgesehenen Kassetten aus Karton oder Kunststoff sind im allgemeinen ungeeignet zur Aufbewahrung von plattenförmigen Informationsträgern hoher Speicherdichte, wie sie beispielsweise eine optisch auslesbare Videoplatte oder eine optisch auslesbare digitale Schallplatte darstellen. Zwar bietet eine solche Aufbewahrungskassette grundsätzlich einen gewissen Schutz gegen Beschädigung des Inhaltes, doch vermag hiermit ein ausreichender Schutz gegen Verzug aufgrund hoher Anforderungen an die Verzugsfreiheit nicht erfüllt zu werden. Abgesehen davon, dass der Informationsträger in der Kassette plan gelagert werden muss, muss auch dafür gesorgt werden, dass eine evtl. Verwindung der Kassette sich nicht auf die in die Kassette eingelegte Platte überträgt.

Es ist bereits vorgeschlagen (DE-A-3 140 146.5) worden, zur Gewährleistung der zu fordernden Lagereigenschaften für solche plattenförmigen Informationsträger hoher Speicherdichte einen klappbaren Behälter nach Art eines Kassettenaufnahmebehälters für eine Magnetbandkassette vorzusehen, in den der eigentliche Plattenbehälter einschiebbar ist.

Aus der Schrift US-A-3 109 539 ist eine Aufbewahrungskassette bekannt, bei der eine eingelegte Platte sowohl in ihrem Mittelbereich wie auch in ihren Randbereichen zwischen den Kassettenhälften eingespannt ist. Dies hat jedoch den Nachteil, dass eine evtl. Verwindung der Platte sich auf die Kassette überträgt, was unbedingt zu vermeiden ist.

Ausgehend von einer Aufbewahrungskassette zur Aufbewahrung von plattenförmigen Informationsträgern hoher Speicherdichte, insbesondere Digitalplatten, bestehend wenigstens aus einem flachen kastenförmigen Bodenteil und einem dieses Bodenteil an der Oberseite abschliessenden aufnehmbaren bzw. aufklappbaren Deckelteil, wird diese Aufgabe gemäss der Erfindung dadurch gelöst, dass der Boden des Bodenteils für eine Lagerung des Informationsträgers ausschliesslich im von Informationsspuren freien Mittenbereich eine gegenüber der eigentlichen Bodenfläche erhöhte Auflage mit einer zentralen, sich über die Auflagenoberseite hinaus erstreckenden Zapfenanordnung aufweist und dass die dem Mittellochdurchmesser des Informationsträgers angepasste Zapfenanordnung im abgelegten Zustand des Informationsträgers in dessen Mittelloch eingreift, wobei oberhalb und unterhalb des eingelegten plattenförmigen Informationsträgers ein freier Raum vorgesehen ist, der so bemessen ist, dass der eingelegte plattenförmige Informationsträger die Aufbewahrungskassette auch unter Berücksichtigung maximal zulässiger Verwindungstoleranzen lediglich im Bereich der erhöhten Auflage berührt.

Der Erfindung liegt die wesentliche Erkenntnis zugrunde, dass eine optimale Sicherheit gegen Verwindung eines Informationsträgers dadurch gegeben ist, dass er lediglich im informationsspurfreien Mittenbereich in der Aufbewahrungskassette gelagert wird, also der äussere Plattenbereich einschliesslich des Bereiches, der die Informationsspurenspirale aufweist, frei schwebend ist.

Der Abstand des abgelegten Informationsträgers zum Kassettenboden und zum Kassettendeckel im Bereich ausserhalb der Auflage wird so bemessen, dass eine Berührung des Informationsträgers mit dem Bodenteil und/oder dem Deckelteil auch unter Berücksichtigung maximal zulässiger Verzugstoleranzen sowohl des Informationsträgers als auch des Kassettengehäuses mit Sicherheit vermieden ist.

Die Fixierung des in die Kassette abgelegten Informationsträgers kann durch geeignete Gestaltung bzw. durch federnde Eigenschaften der Zapfenanordnung herbeigeführt werden. Zweckmässige Ausgestaltungen hiervor sind in den Ansprüchen 4 bis 8 angegeben.

Eine weitere vorteilhafte Möglichkeit der Fixierung des abgelegten Informationsträgers in der Kassette besteht darin, auf der Innenseite des Deckelteils eine weitere erhöhte Auflage vorzusehen, die so bemessen ist, dass der Informationsträger im geschlossenen Zustand der Kassette in seinem Mittelbereich zwischen beide Auflagen eingespannt ist. Zweckmässige Ausgestaltungen hierfür sind in den Ansprüchen 9 und 10 angegeben.

Die erhöhte Auflage im Bodenteil und gegebenenfalls auch im Deckelteil können auf verschiedene Weise gestaltet sein. Zweckmässige Ausgestaltungen sind in den Ansprüchen 2 und 3 angegeben.

Grundsätzlich können das Bodenteil und das Deckelteil voneinander getrennt sein. In diesem Falle sind lediglich für ihre gegenseitige Fixierung im zusammengefügten Zustand am Bodenteil und am Deckelteil einander zugeordnete randseitige Ausnehmungen und Ansätze vorzusehen. Für verschiedene Anwendungszwecke ist es jedoch sinnvoll, Boden- und Deckelteil einseitig über ein Scharnier fest miteinander zu verbinden.

Zum leichteren Handhaben beim Einlegen und Herausnehmen des Informationsträgers aus der Kassette ist es sinnvoll, wenigstens im Bodenteil auf beiden Seiten im Mittenbereich Ausnehmungen zum Greifen des Informationsträgers vorzusehen.

In Weiterbildung der Erfindung können für eine anspruchsvollere Verpackung das Bodenteil und das Deckelteil eine den Informationsträger in sich aufnehmende Palette darstellen, die gegebenenfalls zusammen mit einem Beiheft in einen kastenförmigen Behälter eingelegt oder eingeschoben wird. Weitere vorteilhafte Ausgestaltungen für eine solche Doppelbehälterkassette sind in den Ansprüchen 15 und 16 angegeben.

In einer anderen Weiterbildung der Erfindung, bei der das Boden- und der Deckelteil voneinander trennbar und lediglich durch einander zugeordnete randseitige Ausnehmungen und Ansätze gegeneinander fixierbar sind, ist das Bodenteil mit dem darin abgelegten Informationsträger als stapelbare Palette gestaltet.

Anhand von Ausführungsbeispielen soll die Erfindung im folgenden noch näher erläutert werden. In der Zeichnung bedeuten:

Fig. 1 eine erste Ausführungsform einer Aufbewahrungskassette im Querschnitt,

Fig. 2 eine zweite Ausführungsform einer Aufbewahrungskassette im Querschnitt,

Fig. 3, 4 eine erste Ausführungsform einer Zapfenanordnung im Querschnitt und in Aufsicht,

Fig. 5, 6 eine zweite Ausführungsform einer Zapfenanordnung im Querschnitt und in Aufsicht,

Fig. 7, 8 eine dritte Ausführungsform einer Zapfenanordnung im Querschnitt und in Aufsicht,

Fig. 9, 10 eine vierte Ausführungsform einer Zapfenanordnung im Querschnitt und in Aufsicht,

Fig. 11 eine fünfte Ausführungsform einer Zapfenanordnung im Querschnitt mit deckelseitigem Spreizkonus,

Fig. 12 der Mittelteil einer Aufbewahrungskassette im Querschnitt, bei dem der eingelegte Informationsträger zwischen deckel- und bodenseitiger erhöhter Auflage fixiert ist,

Fig. 13 eine perspektivisch dargestellte Palettenausführung einer Aufbewahrungskassette für eine Fixierung des eingelegten Informationsträgers zwischen einer erhöhten boden- und deckelseitigen Auflage,

Fig. 14 die Scharnierausführung der Aufbewahrungskassette nach Fig. 13,

Fig. 15, 16 die ausschnittsweise Darstellung von Fixiermöglichkeiten zwischen Bodenteil und Deckel bei getrennter Ausführung von Bodenteil und Deckelteil,

Fig. 17 die perspektivische Darstellung einer Aufbewahrungskassette in Doppelbehälterausführung,

Fig. 18 die perspektivische Darstellung einer Palette der Doppelbehälterausführung nach Fig. 7,

Fig. 19 ein Ausschnitt einer Palette der Doppelbehälterausführung nach Fig. 17 mit Scharnieren,

Fig. 20 eine Seitenansicht einer Palette der Doppelbehälterausführung nach Fig. 17 mit einem Beiblatt,

Fig. 21 eine Seitenansicht einer weiteren Palette der Doppelbehälterausführung nach Fig. 17 mit Beiheft und Beiblattumhüllung,

Fig. 22 eine Variante des kastenförmigen Behälters der Doppelbehälterausführung nach Fig. 17,

Fig. 23, 24 eine weitere Ausführung einer Aufbewahrungskassette, im Querschnitt und in Aufsicht,

Fig. 25, 26 eine weitere spezielle Ausführung eines stapelbaren Bodenteils für eine Aufbewahrungskassette im Querschnitt und in Aufsicht.

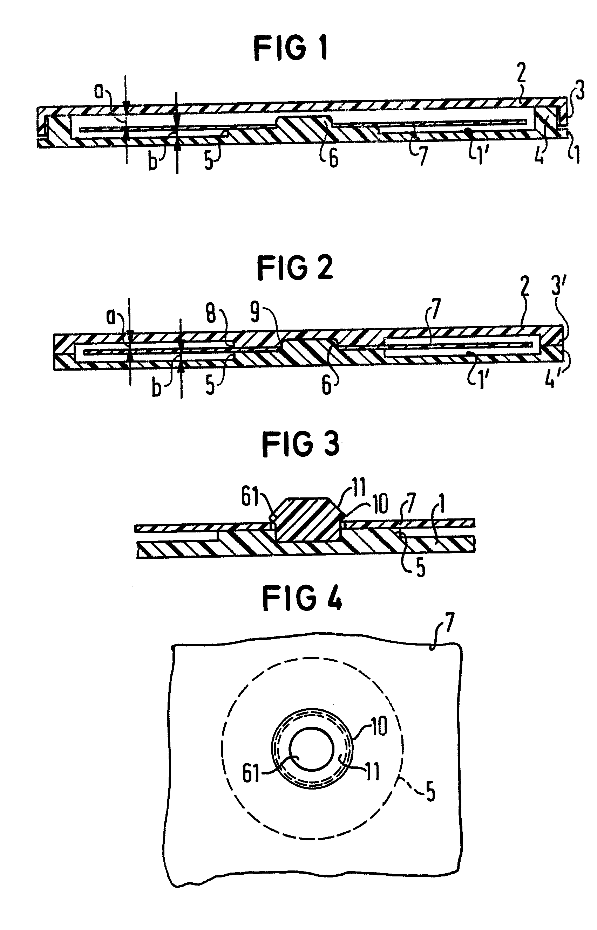

Die im Schnitt dargestellte Aufbewahrungskassette nach Fig. 1 weist ein Bodenteil 1 auf, das an der Oberseite mit einem Deckelteil 2 zu einem geschlossenen Gehäuse ergänzt ist. Das Deckelteil 2 greift dabei mit seinem erhöhten Rand 3 über die Seitenwandung 4 des Bodenteils 1 über. Das Bodenteil 1 weist in seinem Mittenbereich eine erhöhte Auflage 5 kreisförmiger Gestalt auf, die wiederum in ihrer Mitte in einen Zapfen 6 übergeht. Auf dieser erhöhten Auflage 5 ist der eine digitale Schallplatte darstellende plattenförmige Informationsträger 7 abgelegt, in dessen Mittelloch der Zapfen 6 eingreift. Der kreisförmige Zapfen 6 ist hinsichtlich seines Durchmessers hier so bemessen, dass der Informationsträger 7 im auf die Auflage 5 aufgelegten Zustand leicht im Zapfen 6 verklemmt und damit in seiner Ablage fixiert ist. Die Auflagefläche der erhöhten Auflage 5 ist so bemessen, dass der plattenförmige Informationsträger lediglich mit seinem informationsspurfreien Mittenteil auf der erhöhten Auflage aufliegt. Eine sonstige Auflage ist nicht vorgesehen, so dass der Informationsträger in der Aufbewahrungskassette über den Informationsspurbereich hinaus bis zum äusseren Rand auflagefrei ist. Die Abstände a und b des Informationsträgers 7 im auflagefreien Bereich zwischen dem Deckelteil 2 einerseits und dem Boden 1' des Bodenteils 1 andererseits sind so gewählt, dass eine Berührung des Informationsträgers 7 in diesem auflagefreien Bereich mit dem Bodenteil und/oder dem Deckelteil auch unter Berücksichtigung maximal zulässiger Verzugstoleranzen sowohl des Informationsträgers als auch des Kassettengehäuses mit Sicherheit vermieden sind.

Die Aufbewahrungskassette nach Fig. 2, ebenfalls im Schnitt dargestellt, zeigt eine Variante zur Ausführungsform nach Fig. 1 insofern, als hier die Fixierung des auf die erhöhte Auflage 5 des Bodenteils 1 abgelegten Informationsträgers 7 nicht im Zapfen 6 erfolgt. Das Fixieren geschieht hier dadurch, dass auf der Innenseite des Deckelteils 2 eine weitere erhöhte Auflage 8 vorgesehen ist, die den Abmessungen der erhöhten Auflage 5 angepasst ist und eine zentrale Aussparung 9 aufweist, in die im geschlossenen Zustand der Aufbewahrungskassette der Zapfen 6 eingreift. Mit anderen Worten wird hier der Informationsträger 7 zwischen die beiden erhöhten Auflagen 5 und 8 eingeklemmt.

Im Unterschied zur Ausführungsform nach Fig. 1 sind das Bodenteil 1 und das Deckelteil 2 in Fig. 2 randseitig gleich ausgebildet und weisen jeweils einen umlaufenden erhöhten Rand 3' und 4' auf, die stirnseitig unmittelbar aneinander grenzen. Aufgrund der gleichartigen Ausführung der Profile des Bodenteils 1 und des Deckelteils 2 sind hier die Abstände a und b zwischen dem Informationsträger 7 im auflagefreien Bereich zwischen dem Deckelteil 2 einerseits und dem Bodenteil 1 andererseits gleich gross.

Bei der in den Fig. 3 und 4 im Schnitt und in Aufsicht dargestellten Ausführungsform einer Zapfenanordnung besteht diese aus dem Zapfen 61 aus einem geeigneten elastischen Material.

Der Zapfen 61 ist in das Bodenteil 1, und zwar in die erhöhte Auflage 5, eingelassen und weist zur Fixierung des Informationsträgers 7 auf der erhöhten Auflage 5 ein ringnasenförmiges Federrastprofil 10 auf. Oberhalb des Federrastprofils 10 mündet der Zapfen in einen Konus 11 aus. Das Federrastprofil 10 stellt eine Federrast dar, über die hinweg der abzulegende Informationsträger 7 in seine Sollstellung auf der erhöhten Auflage 5 einrastet.

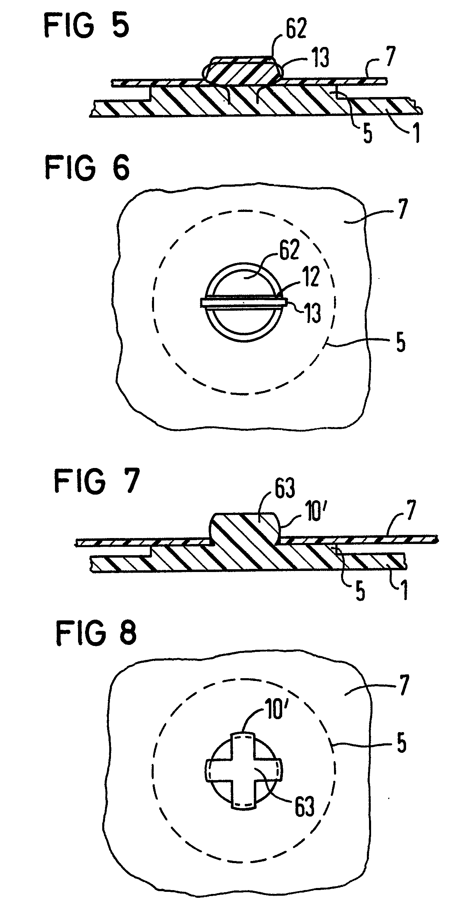

Eine weitere Ausführungsform für eine Zapfenanordnung im Querschnitt und in Aufsicht zeigen die Fig. 5 und 6. Die Zapfenanordnung besteht hier aus einem zum freien oberen Ende hin konisch auslaufenden Zapfen 62 mit einem senkrechten Schlitz 12, der einen in das Bodenteil 1 eingelassenen Federbügel 13 aufnimmt. Der Federbügel 13 ragt zu beiden Seiten des Zapfens 62 über dessen Umfangsfläche hinaus und bildet auf diese Weise die Federrast, über die hinweg der Informationsträger 7 auf der Auflage 5 fixiert wird.

Bei der weiterhin im Querschnitt und in Aufsicht dargestellten Ausführung einer Zapfenanordnung nach den Fig. 7 und 8, bei der der Informationsträger 7 über einen Federeigenschaften aufweisenden Zapfen auf der Auflage 5 fixiert ist, besteht die Zapfenanordnung wiederum aus einem Zapfen 63, der ein tonnenförmiges Federrastprofil 10' hat und, wie die Aufsicht auf Fig. 8 zeigt, senkrecht zur Achse einen kreuzförmigen Querschnitt aufweist. Dieser kreuzförmige Querschnitt erhöht die Federeigenschaften des Materials und ermöglicht es, den Zapfen 63 unmittelbar bei der Herstellung des Bodenteils in einem Fertigungsvorgang mit diesem herzustellen.

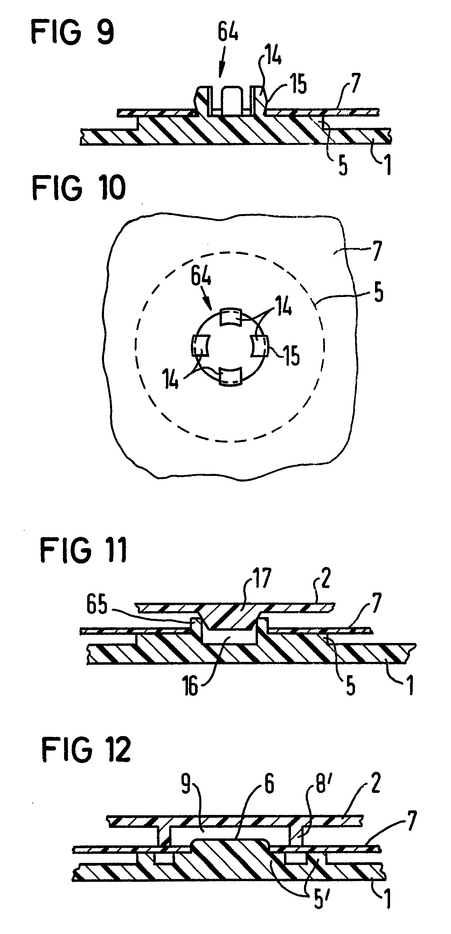

Eine Variante zur Ausführungsform nach den Fig. 7 und 8 zeigen die Fig. 9 und 10 im Querschnitt und in Aufsicht. Die Zapfenanordnung 64 besteht hier aus mehreren Federsegmenten 14 nach Art einer axial geschlitzten Federhülse. Zum formschlüssigen Eingriff der Zapfenanordnung in das Mittelloch des Informationsträgers 7 weisen sie an ihrer Aussenseite ein Federrastprofil 15 auf. Auch hier ist es möglich, das Bodenteil 1 gemeinsam mit der erhöhten Auflage 5 und der Zapfenanordnung 64 in einem Fertigungsvorgang herzustellen.

Fig. 11 zeigt im Querschnitt eine weitere Möglichkeit für eine Fixierung des abzulegenden Informationsträgers auf der erhöhten Auflage 5 im Bodenteil 1 über die Zapfenanordnung hinweg auf. Die Zapfenanordnung 65 besteht hier aus einer Ringsegmentanordnung, deren zentrale Öffnung 16 unter die Auflagefläche der erhöhten Auflage 5 hinaus nach unten reicht. Das Verspannen der Ringstegsegmente gegen die Innenwandung des Mittelloches des auf die erhöhte Auflage 5 abgelegten Informationsträgers 7 erfolgt mittels eines auf der Innenseite des Deckelteils 2 vorgesehenen Spreizkonus 17, der in geschlossenem Zustand der Aufnahmekassette in die zentrale Öffnung der Ringsegmentanordnung eingreift.

Bei den bisherigen Ausführungsbeispielen hatte die erhöhte Auflage im Bodenteil und gegebenenfalls auch die erhöhte Auflage im Deckelteil eine kreisscheibenförmige Gestalt. Dies ist jedoch nicht zwingend notwendig. Die erhöhte Auflage kann in jedem Fall auch ein auf eine Kreisfläche begrenztes Steg- bzw. Stiftmuster sein, was sich insbesondere da anbietet, wo Materialeinsparungen erwünscht sind. Eine solche modifizierte Ausführungsform für eine erhöhte Auflage im Bodenteil 1 und eine solche im Deckelteil 2 entsprechend der im Zusammenhang mit Fig. 2 beschriebenen Ausführungsform zeigt Fig. 12. Die erhöhte Auflage 8' auf der Innenseite des Deckelteils 2 besteht hier lediglich aus einem Ringsteg. Die erhöhte Auflage 5' im Bodenteil 1 weist ihrerseits ein ringscheibenförmiges Mittelteil mit dem sich darüber erhebenden Zapfen 6 und einen hierzu konzentrisch angeordneten Ringsteg auf. Die Fixierung des Informationsträgers 7 erfolgt wie bei Fig. 2 durch Verspannen des Informationsträgers 7 zwischen der deckelseitigen und der bodenseitigen erhöhten Auflage 8' und 5'. Es versteht sich von selbst, dass eine materialsparende Gestaltung dieser erhöhten Auflagen im Deckelteil und im Bodenteil in gleicher Weise auch durch andere Ringsteg- oder Stiftmuster verwirklicht werden kann.

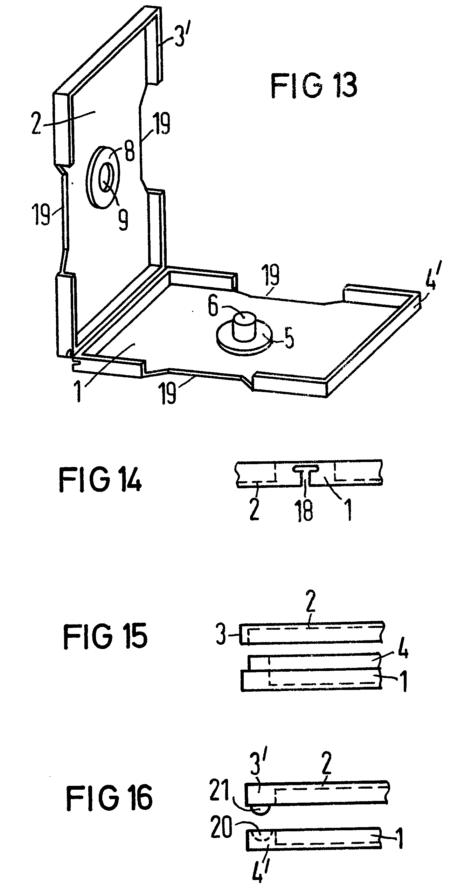

Fig. 13 zeigt eine Palettenausführungsform einer Aufbewahrungskassette entsprechend Fig. 2 in perspektivischer Darstellung, bei der das Deckelteil 2 mit der erhöhten ringscheibenförmigen Auflage 8 und das Bodenteil 1 mit der scheibenförmigen erhöhten Auflage 5 und dem sich darüber erhebenden Zapfen 6 einseitig aneinanderhängend miteinander verbunden sind. Die einseitige Verbindung ist, wie in Fig. 13 angedeutet und in Fig. 14 ausschnittsweise dargestellt, im Übergangsbereich zwischen dem Bodenteil 1 und dem Deckelteil 2 als Scharnierband gestaltet. Das Scharnierband ist hier beispielsweise durch eine T-förmige Nut 18 verwirklicht. Weiterhin weisen sowohl das Bodenteil als auch das Deckelteil im Mittenbereich trapezförmige Aussparungen 19 auf, die das Einlegen und das Herausnehmen des Informationsträgers erleichtern. Gegebenenfalls kann auch auf die trapezförmigen Aussparungen 19 im Deckelteil verzichtet werden.

Selbstverständlich können auch das Bodenteil 1 und das Deckelteil 2 völlig voneinander getrennt sein. In diesem Fall müssen jedoch Massnahmen vorgesehen sein, um beim Verschliessen der Aufbewahrungskassette eine gegenseitige Fixierung von Bodenteil und Deckelteil gewährleisten zu können. Die Fig. 15 zeigt ausschnittsweise eine Fixierung, bei der das Deckelteil 2 mit seinem äusseren Rand 3 über die nach innen gestufte Wandung 4 des Bodenteils 1, wie das auch bei der Ausführungsform nach Fig. 1 der Fall ist, übergreift. Bei der Ausführungsform entsprechend Fig. 2, bei der die Randteile an Boden- und Deckelteil plan aufeinanderliegen, können zur Fixierung, wie das beispielsweise Fig. 16 zeigt, in der Stirnfläche des Randes 4' des Bodenteils 1 kugelartige Ausnehmungen 20 vorgesehen sein, in die auf der Stirnseite 3' des Deckelteils 2 in entsprechender Anordnung angebrachte halbkugelförmige Ansätze 21 eingreifen.

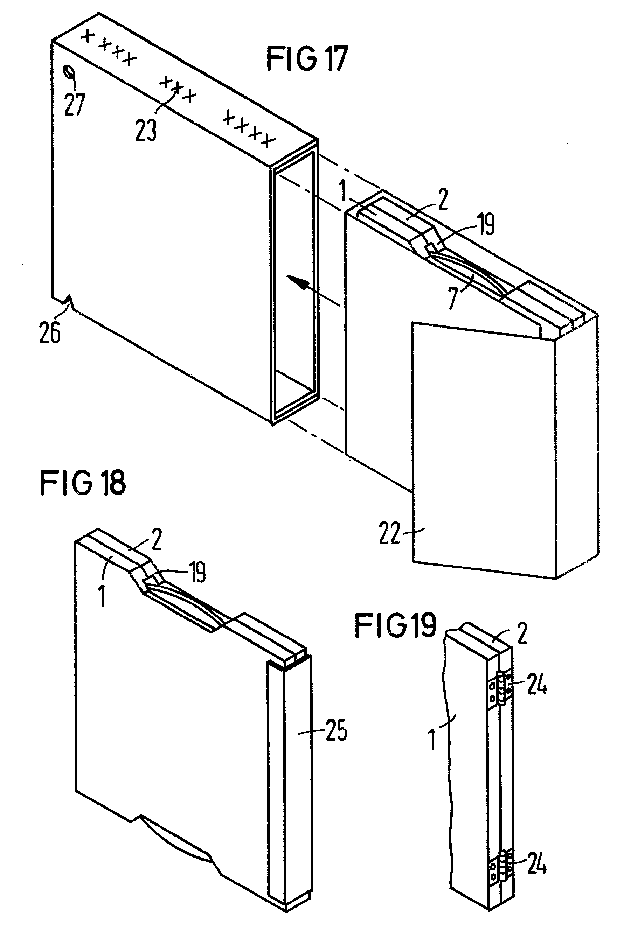

Die Paletten-Ausführungsform einer Aufbewahrungskassette nach Fig. 13 kann zur Gestaltung einer anspruchsvolleren Verpackung wie Fig. 17 zeigt umgeben von einem Beiblatt 22 in einen kastenförmigen Behälter 23 eingeschoben sein. Der kastenförmige Behälter 23 kann dabei auf allen Seiten beschriftet oder bedruckt sein. Er kann aber auch aus einem durchsichtigen Kunststoff bestehen, der lediglich im Bereich seiner Schmalseiten eine Beschriftung aufweist und im übrigen den Blick auf das bedruckte Beiblatt 22 freigibt. Für den Fall einer Beschriftung bzw. einer Bedruckung des kastenförmigen Behälters 23 kann auf ein bedrucktes Beiblatt auch verzichtet werden.

Bei der Palette nach Fig. 18 sind das Bodenteil 1 und das Deckelteil 2 einseitig durch einen ein Scharnierband 25 darstellenden Klebestreifen aus Kunststofffolie oder Gewebe miteinander verbunden. Bei der in Fig. 19 ausschnittsweise gezeigten Variante erfolgt die klappbare einseitige Verbindung vom Bodenteil 1 und Deckelteil 2 mit Hilfe zweier Scharniere 24.

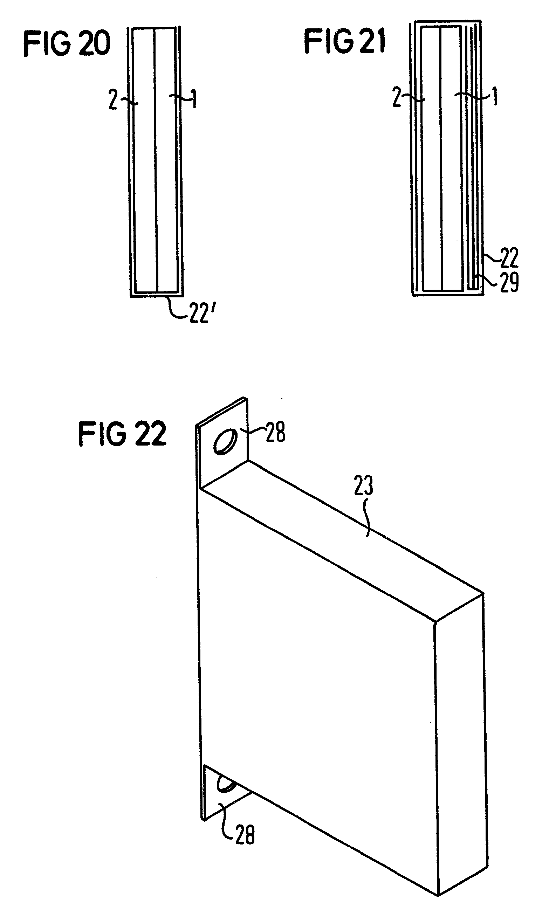

Wie Fig. 17 noch zeigt, kann der kastenförmige Behälter 23 nach Fig. 17 an seinem hinteren Ende eine Aussparung 26 bzw. eine Bohrung 27 aufweisen, mit deren Hilfe es möglich ist, eine solche Zweibehälteranordnung in einem Verkaufsständer diebstahlssicher zu befestigen. Eine weitere Variante für eine solche Diebstahlsicherung im Zusammenhang mit einem kastenförmigen Behälter 23 zeigt Fig. 22, bei der dieser Behälter am einen Ende flanschartige gelochte Laschen 28 aufweist.

Während bei der Ausführungsform nach Fig. 17 das Beiblatt 22 die Palette vollständig umschlingt und darüber hinaus auch noch einen Überschlag aufweist, ist entsprechend Fig. 20 ein Beiblatt 22′ vorgesehen, das die Palette lediglich auf drei Seiten umgibt.

Die Ausführung der Aufbewahrungskassette in Form einer Zweibehälteranordnung entsprechend Fig. 17 ist besonders dann sinnvoll, wenn der Informationsträger mit einem Beiheft versehen werden soll. Entsprechend der Ausführungsform nach Fig. 21 ist dieses Beiheft 29 der Palette beigelegt und die Palette und dieses Beiheft entsprechend der Ausführungsform nach Fig. 17 mit einem Beiblatt 22 umgeben. Das so gebildete Paket wird dann entsprechend Fig. 17 in den kastenförmigen Behälter 23 eingeschoben.

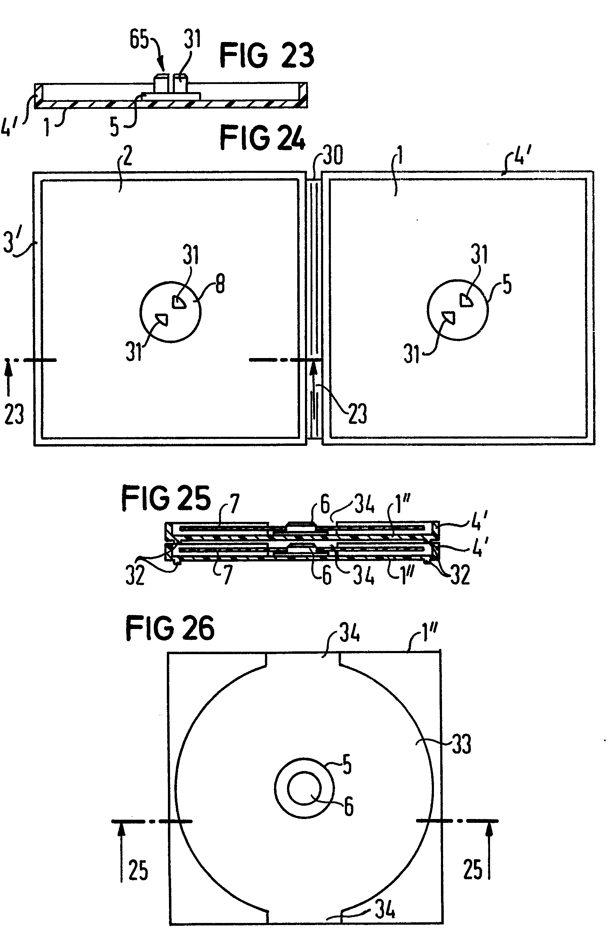

Die Fig. 23 und 24 zeigen schliesslich eine weitere Ausführungsform für eine Aufbewahrungskassette bzw. eine Palette, bei der das Bodenteil 1 und das Deckelteil 2 an einer Seite in einem Scharnierband 30 miteinander fest verbunden sind. Wie der Querschnitt des Bodenteils nach Fig. 23, aber auch die Aufsicht auf das Boden- und das Deckelteil nach Fig. 24 erkennen lassen, besteht hier die Zapfenanordnung 66 aus vier stiftförmigen Teilelementen 31 mit kreissektorförmigem Querschnitt, von denen jeweils zwei einander gegenüberliegende Teilelemente auf der erhöhten Auflage 5 des Bodenteils 1 und der erhöhten Auflage 8 auf der Innenseite des Deckelteils 2 angeordnet sind. Hier greifen sozusagen die auf der erhöhten Auflage 8 angeordneten Teileelemente 31 der Zapfenanordnung 66 erst beim Zusammenklappen von Bodenteil 1 und Deckelteil 2 in das Mittelloch des auf die erhöhte Auflage 5 des Bodenteils abgelegten Informationsträgers ein. Gleichzeitig wird der Informationsträger hierbei durch Einspannen zwischen den erhöhten Auflagen fixiert.

Bei Verwendung von getrennten Bodenteilen 1 und Deckelteilen 2 besteht, wie die Fig. 25 und 26 im Querschnitt und in Aufsicht zeigen, die Möglichkeit, Bodenteile 1 stapelbar auszuführen und sie auf diese Weise bereits im Rahmen der Informationsträgerherstellung für Transportzwecke zu verwenden. Die Bodenteile 1 weisen hierzu auf der Bodenseite randseitige Ansätze auf, die um die Breite der Seitenwandung 4′ vom Rand nach innen versetzt sind und in das jeweils darunterliegende Bodenteil eingreifen. Diese Ansätze 32 sind selbstverständlich so ausgeführt, dass sie hierbei nicht in Berührung mit den in dem darunter angeordneten Bodenteil abgelegten Informationsträger 7 kommen.

Wie die Aufsicht für ein solches stapelbares Palettenbodenteil erkennen lässt, besteht dieses Bodenteil 1 hier praktisch aus einer Platte, in der eine kreisförmige Ausnehmung 33 für die Aufnahme des Informationsträgers 7 vorgesehen ist. Die Ausnehmung 33 wird randseitig lediglich im Mittenbereich auf beiden Seiten zur Schaffung von Grifföffnungen 34 unterbrochen. Anstelle von Grifföffnungen können im Bereich zweier einander diagonal gegenüber liegender Ecken auch Griffmulden vorgesehen sein.

Das Bodenteil 1 und das Deckelteil 2, wie auch der kastenförmige Behälter 23 können in üblicher Weise mittels Pressen, Spritzen, Tiefziehen oder Formschäumen von Kunststoffen hergestellt werden. Auch eine Herstellung auf Kartonbasis ist möglich. Bei einer Zweibehälterausführungsform, also bei der das Bodenteil und das Deckelteil die Funktion einer Palette haben, wird die Ausführung des Bodenteils und des Deckelteils zweckmässig aus einem weichen jedoch in sich starren Formschaum hergestellt, da hier die Palette ja durch ihre Einbringung in den kastenförmigen Behälter den eigentlichen Schutz gegen Beschädigung erhält.

**Patentansprüche**

1. Aufbewahrungskassette und plattenförmiger Informationsträger hoher Speicherdichte, insbesondere Digitalplatte, wobei die Aufbewahrungskassette wenigstens aus einem flachen kastenförmigen Bodenteil und einem dieses Bodenteil an der Oberseite abschliessenden abnehmbaren bzw. aufklappbaren Deckelteil besteht, dadurch gekennzeichnet, dass der Boden (1′) des Bodenteils (1) für eine Lagerung des Informationsträgers (7) ausschliesslich im von Informationsspuren freien Mittenbereich eine gegenüber der eigentlichen Bodenfläche erhöhte Auflage (5) mit einer zentralen, sich über die Auflageoberseite hinaus erstreckenden Zapfenanordnung (6, 61, 62 ... 66) aufweist und dass die dem Mittellochdurchmesser des Informationsträgers angepasste Zapfenanordnung im abgelegten Zustand des Informationsträgers in dessen Mittelloch eingreift, wobei oberhalb und unterhalb des eingelegten plattenförmigen Informationsträgers ein freier Raum vorgesehen ist, der so bemessen ist, dass der eingelegte plattenförmige Informationsträger die Aufbewahrungskassette auch unter Berücksichtigung maximal zulässiger Verwindungstoleranzen lediglich im Bereich der erhöhten Auflage berührt.

2. Aufbewahrungskassette nach Anspruch 1, dadurch gekennzeichnet, dass die erhöhte Auflage (5) eine kreisförmige Platte ist (Fig. 1–11, 13, 23–26).

3. Aufbewahrungskassette nach Anspruch 1, dadurch gekennzeichnet, dass die erhöhte Auflage (5', 8') ein flächenmässig auf eine Kreisfläche begrenztes Steg- bzw. Stiftmuster ist (Fig. 12).

4. Aufbewahrungskassette nach einem der vorhergehenden Ansprüche, dadurch gekennzeichnet, dass die Zapfenanordnung ein Zapfen (6) mit kreisförmigem Querschnitt ist, dessen Durchmesser für einen leichten Klemmeffekt beim Eingreifen des Zapfens in das Mittelloch des abzulegenden Informationsträgers (7) bemessen ist (Fig. 1).

5. Aufbewahrungskassette nach einem der Ansprüche 1 bis 3, dadurch gekennzeichnet, dass die Zapfanordnung ein wenigstens senkrecht zu ihrer Symmetrieachse elastisch verformbarer Zapfen (61, 63) ist, der zum formschlüssigen Eingriff in das Mittelloch des abzulegenden Informationsträgers (7) ein Federrastprofil (10, 10') aufweist (Fig. 3, 4 und 7, 8).

6. Aufbewahrungskassette nach einem der Ansprüche 1 bis 3, dadurch gekennzeichnet, dass die Zapfanordnung (64) nach Art einer axial geschlitzten Federhülse mehrere Federsegmente (14) aufweist, und dass die Federsegmente zum formschlüssigen Eingriff der Zapfanordnung in das Mittelloch des abzulegenden Informationsträgers (7) ein Federrastprofil (15) aufweisen (Fig. 9, 10).

7. Aufbewahrungskassette nach einem der Ansprüche 1 bis 3, dadurch gekennzeichnet, dass die Zapfenanordnung ein Zapfen (62) mit einem hierin verankerten, eine Federrast darstellenden Federbügel (13) ist (Fig. 5 und 6).

8. Aufbewahrungskassette nach einem der Ansprüche 1 bis 3, dadurch gekennzeichnet, dass die Zapfenanordnung (65) eine Ringstegsegmentanordnung ist und dass das Deckelteil (2) auf der Innenseite einen Spreizkonus (17) aufweist, der im geschlossenen Zustand der Kassette in die Öffnung (16) der Ringstegsegmentanordnung eingreift und die Ringstegsegmente gegen die Wandung des Mittelloches des abgelegten Informationsträgers (7) verspannt (Fig. 11).

9. Aufbewahrungskassette nach einem der Ansprüche 1 bis 3, dadurch gekennzeichnet, dass die Zapfenanordnung ein für eine leichtgängige Führung im Mittelloch des abzulegenden Informationsträgers bemessener Zapfen (6) ist, dass ferner auf der Innenseite des Deckelteils (2) eine der erhöhten Auflage (5, 5') des Bodenteils (1) angepasste weitere erhöhte Auflage (8, 8') mit einer konzentrischen Aussparung (9) vorgesehen ist und dass im geschlossenen Zustand der Kassette das freie Ende des Zapfens in diese konzentrische Aussparung eingreift und der abgelegte Informationsträger (7) zwischen die erhöhten Auflagen im Bodenteil und im Deckelteil eingespannt ist (Fig. 12, 13, 23 und 24).

10. Aufbewahrungskassette nach einem der Ansprüche 1 bis 13, dadurch gekennzeichnet, dass auf der Innenseite des Deckelteils (2) eine der erhöhten Auflage (5) im Bodenteil angepasste weitere erhöhte Auflage (8) vorgesehen ist, dass sich ferner die Zapfenanordnung (66) aus stiftförmigen Teilelementen (31) zusammensetzt, die teilweise im Zentrum der erhöhten Auflage des Bodenteils und teilweise im Zentrum der erhöhten Auflage des Deckelteils angeordnet sind und dass im geschlossenen Zustand der Kassette einerseits alle Teilelemente der Zapfenanordnung leichtgängig in das Mittelloch des abgelegten Informationsträgers (7) eingreifen und andererseits der Informationsträger zwischen die erhöhten Auflagen im Bodenteil und im Deckelteil eingespannt ist (Fig. 24).

11. Aufbewahrungskassette nach einem der vorhergehenden Ansprüche, dadurch gekennzeichnet, dass das Bodenteil (1) und das Deckelteil (2) einseitig über ein Scharnier (24, 25, 30) fest miteinander verbunden sind (Fig. 13, 14, 18, 19 und 24).

12. Aufbewahrungskassette nach einem der vorhergehenden Ansprüche, dadurch gekennzeichnet, dass wenigstens im Bodenteil (1) auf beiden Seiten im Mittenbereich Ausnehmungen (19, 34) zum Greifen des Informationsträgers (7) vorgesehen sind (Fig. 13, 17, 18, 25 und 26).

13. Aufbewahrungskassette nach einem der vorhergehenden Ansprüche, dadurch gekennzeichnet, dass das Bodenteil (1) und das Deckelteil (2) eine den Informationsträger (7) in sich aufnehmende Palette darstellen und dass diese Palette gegebenenfalls zusammen mit einem Beiheft (29) in einen kastenförmigen Behälter (23) eingelegt oder eingeschoben ist (Fig. 13 bis 21).

14. Aufbewahrungskassette nach Anspruch 13, dadurch gekennzeichnet, dass der kastenförmige Behälter (23) aus durchsichtigem Kunststoff ist und dass die Palette gegebenenfalls zusammen mit einem Beiheft (29) von einem bedruckten Beiblatt (22, 22') umhüllt in den Behälter eingelegt bzw. eingeschoben ist (Fig. 17, 20, 21).

15. Aufbewahrungsbehälter nach Anspruch 13 oder 14, dadurch gekennzeichnet, dass der Behälter (23) mit wenigstens einer Ausnehmung (26, 27) und/oder einer gelochten Lasche (28) zur diebstahlsicheren Befestigung in einem Verkaufsständer versehen ist (Fig. 17 und 22).

16. Aufbewahrungskassette nach einem der vorhergehenden Ansprüche, dadurch gekennzeichnet, dass das Boden- (1) und das Deckelteil (2) voneinander trennbar und lediglich durch einander zugeordnete randseitige Ausnehmungen und Ansätze (3/4, 20/21) gegeneinander fixierbar sind und dass das Bodenteil (1) mit dem darin abgelegten Informationsträger (7) als stapelbare Palette (1″) gestaltet ist (Fig. 25 und 26).

**Claims**

1. A storage cassette and a disc-shaped high-density information carrier, in particular a digital disc, the storage cassette comprising at least a flat box-shaped bottom section and a detachable/pivotable cover section which covers the upper side of said bottom section, characterized in that for supporting the information carrier (7) exclusively in its central area where it is free from information tracks the bottom (1′) of the bottom section (1) comprises a support (5) which is raised relative to the actual bottom surface and is provided with a peg arrangement (6, 61, 62 ... 66) projecting from the upper side of the support, and in that in the stored condition of the information carrier the peg arrangement, whose diameter is adapted to the centre-hole diameter, engages the centre hole of said carrier, the clearance above and below the inserted disc-shaped information carrier being dimensioned in such a way that the inserted disc-shaped information carrier contacts the storage cassette only at the location of the raised support, even in the case of the maximum permissible warping tolerances.

2. A storage cassette as claimed in Claim 1, characterized in that the raised support (5) is a circular disc (Figs. 1–11, 13, 23–26).

3. A storage cassette as claimed in Claim 1, characterized in that the raised support (5′, 8′) is a peg or pin configuration which bounds a circular area (Fig. 12).

4. A storage cassette as claimed in any one of the preceding Claims, characterized in that the peg arrangement comprises a peg (6) of circular cross-section whose diameter is dimensioded to provide a moderate clamping effect when the peg engages the centre hole of the information carrier (7) to be stored (Fig. 1).

5. A storage cassette as claimed in any one of the Claims 1 to 3, characterized in that the peg arrangement is a peg (61, 63) which can be deformed elastically at least perpendicularly to its axis of symmetry and which for its form-bound engagement in the centre hole of the information carrier (7) to be stored comprises a resilient latching profile (10, 10′). (Figs. 3, 4 and 7, 8).

6. A storage cassette as claimed in any one of the Claims 1 to 3, characterized in that in the same way as an axially split spring sleeve the peg arrangement (64) comprises a pluratlity of spring segments (14), and in that for their form-bound engagement in the centre hole of the information carrier (7) to be stored the spring segments have a resilient latching profile (15). (Figs. 9, 10).

7. A storage cassette as claimed in any one of the Claims 1 to 3, characterized in that the peg arrangement is a peg (62) with a resilient member (13) which acts as a resilient latching means and is anchored to said peg. (Figs. 5 and 6).

8. A storage cassette as claimed in any one of the Claims 1 to 3, characterized in that the peg arrangement (65) is an annular strip-segment arrangement and in that the cover section (2) comprises an expansion cone (17) on its inner side, which cone in the closed condition of the cassette engages the opening (16) in the annular strip-segment arrangement and clamps the annular strip-segments against the wall of the centre hole of the stored information carrier (7). Fig. 11).

9. A storage cassette as claimed in any one of the Claims 1 to 3, characterized in that the peg arrangement is a peg which is dimensioned to engage smoothly in the centre hole of the information carrier to be stored, in that furthermore the inner side of the cover section (2) carries a further raised support (8, 8′) provided with a concentric recess (9) and adapted to the raised support (5, 5′) of the bottom section (1), and in that in the closed condition of the cassette the free end of the peg engages said concentric recess and the stored information carrier (7) is clamped between the raised supports on the bottom section and on the cover section. (Figs. 12, 13, 23 and 24).

10. A storage cassette as claimed in any one of the Claims 1 to 3, characterized in that on the inner side of the cover section (2) there is provided a further raised support (8) adapted to the raised support (5) on the bottom section, in that the peg arrangement (66) comprises pin-shaped sub-elements (31) which are arranged partly in the centre of the raised support of the bottom section and partly in the centre of the raised support of the cover section, and in that in the closed condition of the cassette all the sub-elements of the peg arrangement smoothly engage in the centre hole of the stored information carrier (7) and the information carrier is clamped between the raised supports of the bottom section and of the cover section (Fig. 24).

11. A storage cassette as claimed in any one of the preceding Claims, characterized in that at one side the bottom section (1) and the cover section (2) are fixedly connected to each other by a hinge (24, 25, 30). (Figs. 13, 14, 18, 19 and 24).

12. A storage cassette as claimed in any one of the preceding Claims, characterized in that for gripping the information carrier (7) at least the bottom section (1) is formed with recesses (19, 34) at opposite sides in the centre area. (Figs. 13, 17, 18, 25 and 26).

13. A storage cassette as claimed in any one of the preceding Claims, characterized in that the bottom section (1) and the cover section (2) form a cartridge which accommodates the information carrier (7) and in that said cartridge, if desired together with a booklet (29) is placed or inserted into a box-shaped container (23). (Figs. 13 to 21).

14. A storage cassette as claimed in Claim 13, characterized in that the box-shaped container (23) is made of a transparent plastics and in that the cartridge, as the case may be, together with a booklet (29) and surrounded by a printed wrapper (22, 22′) is placed or inserted into the container. (Figs. 17, 20, 21).

15. A storage cassette as claimed in Claim 13 or 14, characterized in that the container (23) is provided with at least one recess (26, 27) and/or a perforated strip (28) for theft-protected mounting in a sales display. (Figs. 17 and 22).

16. A storage cassette as claimed in any one of the preceding Claims, characterized in that the bottom section (1) and the cover section (2) are detachable from each other and can be attached to each other exclusively by means of interengageable recesses and projections (3/4, 20/21) at the edge and in that the bottom section (1) with the information carrier (7) stored therein is constructed as a stackable tray (1''). Figs. 25 and 26).

## Revendications

1. Coffret de rangement et support d'information en forme de disque à haute densité d'enregistrement, en particulier de disque numérique, le coffret de rangement étant formé d'au moins une partie de fond en forme de boîte plane et une partie de couvercle amovible ou relevable formant le côté supérieur de cette partie de fond, caractérisé en ce que le fond (1') de la partie de fond (1) comporte, en vue d'un soutien du support d'information (7), exclusivement dans la zone centrale dépourvue de pistes d'information, une pièce d'appui (5) surélevée par rapport à la surface de fond proprement dite et présentant un système de tenon (6, 61, 62 ... 66) central s'étendant au-dessus de la face supérieure de la pièce d'appui et que le système de tenon adapté au diamètre du trou central du support d'information s'engage, dans l'état posé en place du support d'information, dans le trou central de ce dernier, tandis qu'au-dessus et en dessous du support d'information en forme de disque mis en place est prévu un espace libre qui est dimensionné d'une manière telle que le support d'information en forme de disque mis en place ne soit en contact avec le coffret de rangement, même compte tenu des tolérances de gauchissement maximales admissibles, que dans la zone de la pièce d'appui surélevée.

2. Coffret de rangement suivant la revendication 1, caractérisé en ce que la pièce d'appui surélevée (5) est une plaque circulaire (Fig. 1 à 11, 13, 23 à 26).

3. Coffret de rangement suivant la revendication 1, caractérisé en ce que la pièce d'appui surélevée (5', 8') est un motif nervuré ou à ergots limité en surface à une surface circulaire (Fig. 12).

4. Coffret de rangement suivant l'une quelconque des revendications précédentes, caractérisé en ce que le système de tenon est un tenon (6) de section circulaire, dont le diamètre est calibré (Fig. 1) de manière à assurer un effet de coincement léger lors de l'introduction du tenon dans le trou central du support d'information (7) à poser (Fig. 1).

5. Coffret de rangement suivant l'une quelconque des revendications 1 à 3, caractérisé en ce que le système de tenon est un tenon (61, 63) déformable élastiquement au moins dans le sens perpendiculaire à son axe de symétrie, qui présente un profil de verrouillage élastique (10, 10') destiné à être engagé avec épousement de forme dans le trou central du support d'information (7) à poser (Fig. 3, 4 et 7, 8).

6. Coffret de rangement suivant l'une quelconque des revendications 1 à 3, caractérisé en ce que le système de tenon (64) comporte plusieurs segments élastiques (14) à la manière d'une douille élastique refendue axialement et que les segments élastiques présentent un profil de verrouillage élastique (15) permettant au système de tenon d'être engagé avec épousement de forme dans le trou central du support d'information (7) à poser (Fig. 9, 10).

7. Coffret de rangement suivant l'une quelconque des revendications 1 à 3, caractérisé en ce que le système de tenon est un tenon (62) comportant un étrier élastique (13) et constituant un verrouillage à ressort qui y est ancré (Fig. 5 et 6).

8. Coffret de rangement suivant l'une quelconque des revendications 1 à 3, caractérisé en ce que le système de tenon (65) est un système de tenon à segments de nervure annulaire et que la partie de couvercle (2) présente sur sa face interne un cône d'expansion (17) qui, dans l'état de fermeture du coffret, s'engage dans l'ouverture (16) du système à segments de nervure annulaire et serre les segments de nervure annulaire contre la paroi du trou central du support d'information (7) posé (Fig. 11).

9. Coffret de rangement suivant l'une quelconque des revendications 1 à 3, caractérisé en ce que le système de tenon est un tenon (6) calibré en vue d'un guidage libre dans le trou central du support d'information à poser, qu'en outre, sur la face interne de la partie de couvercle (2), est prévue une autre pièce d'appui surélevée (8, 8') présentant un évidement concentrique (9) adaptée à la pièce d'appui surélevée (5, 5') de la partie de fond (1) et que dans l'état de fermeture du coffret, l'extrémité libre du tenon s'engage dans cet évidement concentrique et le support d'information (7) posé est serré entre les pièces d'appui surélevées dans la partie de fond et dans la partie de couvercle (Fig. 12, 13, 23 et 24).

10. Coffret de rangement suivant l'une quelconque des revendications 1 à 13, caractérisé en ce qu'une autre pièce d'appui surélevée (8) adaptée à la pièce d'appui surélevée (5) de la partie de fond est prévue sur la face interne de la partie de couvercle (2), que le système de tenon (66) est, en outre, formé d'éléments partiels en forme d'ergots (31) qui sont disposés pour partie au centre de la pièce d'appui surélevée de la partie de fond et pour partie au centre de la pièce d'appui surélevée de la partie de couvercle et que dans l'état de fermeture du coffret, d'une part, tous les éléments partiels du système de tenon s'engagent librement dans le trou central du support d'information (7) posé et, d'autre part, le support d'information est serré entre les pièces d'appui surélevées de la partie de fond et de la partie de couvercle (Fig. 24).

11. Coffret de rangement suivant l'une quelconque des revendications précédentes, caractérisé en ce que la partie de fond (1) et la partie de couvercle (2) sont reliées à demeure l'une à l'autre d'un côté, par l'intermédiaire d'une charnière (24, 25, 30) (Fig. 13, 14, 18, 19 et 24).

12. Coffret de rangement suivant l'une quelconque des revendications précédentes, caractérisé en ce qu'au moins dans la partie de fond (1), des évidements (19, 34) permettant de saisir le support d'information (7) sont prévus des deux côtés dans la zone centrale (Fig. 13, 17, 18, 25 et 26).

13. Cassette de rangement suivant l'une quelconque des revendications précédentes, caractérisée en ce que la partie de fond (1) et la partie de couvercle (2) constituent une palette recevant le support d'information (7) et que cette palette est insérée ou glissée, le cas échéant avec un livret (29), dans un contenant en forme d'étui (23) (Fig. 13 à 21).

14. Coffret de rangement suivant la revendication 13, caractérisé en ce que le contenant en forme d'étui (23) est en matière plastique transparente et que la palette est insérée ou glissée dans le contenant, le cas échéant avec un livret (29), en étant entourée par une feuille supplémentaire imprimée (22, 22') (Fig. 17, 20, 21).

15. Coffret de rangement suivant la revendication 13 ou 14, caractérisé en ce que le contenant (23) est pourvu d'au moins un évidement (26, 27) et/ou d'une patte perforée (28) en vue de la fixation à un présentoir d'une manière assurant une protection contre le vol (Fig. 17 et 22).

16. Coffret de rangement suivant l'une quelconque des revendications précédentes, caractérisé en ce que la partie de fond (1) et la partie de couvercle (2) peuvent être séparées l'une de l'autre et ne peuvent être fixées l'une par rapport à l'autre qu'au moyen d'évidements et de saillies mutuellement associés à leurs bords (3, 4, 20, 21) et que la partie de fond (1) avec le support d'information (7) qui y est posé, a la forme d'une palette empilable (1'') (Fig. 25 et 26).

# FIG 1

# FIG 2

# FIG 3

# FIG 4

**FIG 5**

**FIG 6**

**FIG 7**

**FIG 8**

FIG 9

FIG 10

FIG 11

FIG 12

FIG 13

FIG 14

FIG 15

FIG 16

# FIG 17

# FIG 18

# FIG 19

FIG 20

2 ~ 1

22'

FIG 21

2 ~ 1

22
29

FIG 22

28

23

28

FIG 23

FIG 24

FIG 25

FIG 26